# EUROPEAN PATENT SPECIFICATION

(11) **EP 4 147 154 B1**
(45) Date of publication and mention of the grant of the patent: **14.10.2026**
(21) Application number: 21800490.1
(22) Date of filing: 02.04.2021
(51) Int. Cl.: G06F 40/58, G06F 40/40, G06F 40/10, G10L 15/00, G10L 15/22, G10L 15/26, G10L 15/06, G10L 15/065

(54) **INCREMENTAL POST-EDITING AND LEARNING IN SPEECH TRANSCRIPTION AND TRANSLATION SERVICES**
INKREMENTELLE NACHBEARBEITUNG UND LERNEN IN SPRACHTRANSKRIPTIONS- UND ÜBERSETZUNGSDIENSTEN
POST-ÉDITION ET APPRENTISSAGE INCRÉMENTIELS DANS DES SERVICES DE TRANSCRIPTION ET DE TRADUCTION DE LA PAROLE

(30) Priority: 08.05.2020 US 202063022025 P
(43) Date of publication of application: 15.03.2023
(73) Proprietor: Zoom Communications, Inc., San Jose, CA 95113 (US)
(72) Inventor: WAIBEL, Alexander, Sammamish, Washington 98075 (US); STÜKER, Sebastian, 76131 Karlsruhe (DE)
(74) Representative: Slingsby Partners LLP
(86) International application number: PCT/US2021/025621
(87) International publication number: WO 2021/225728

(56) References cited:
- EP-A1- 3 447 655
- WO-A1-2013/083132
- US-A1- 2003 046 062
- US-A1- 2009 037 171
- US-A1- 2011 307 241
- US-A1- 2013 103 381
- US-A1- 2014 288 914
- US-A1- 2019 286 706
- SAWAF HASSAN: "Automatic Speech Recognition and Hybrid Machine Translation for High-Quality Closed-Captioning and Subtitling for Video Broadcast", 28 October 2012 (2012-10-28), San Diego, California, USA, XP093082896, Retrieved from the Internet <URL:https://aclanthology.org/2012.amta-commercial.15/>
- PERIS ET AL.: "Online learning for effort reduction in interactive neural machine translation", COMPUTER SPEECH & LANGUAGE, vol. 58, 8 April 2019 (2019-04-08), pages 98 - 126, XP085745570, Retrieved from the Internet <URL:https://arxiv.org/pdf/1802.03594.pdf> [retrieved on 20210531], DOI: 10.1016/j.csl.2019.04.001

## Description

### PRIORITY CLAIM

The present application claims priority to United States provisional application Serial No. 63/022,025, filed May 8, 2020.

### BACKGROUND

With the advent of advanced speech recognition and translation systems, automatic transcription, translation, subtitling and interpretation for speeches, videos and telecommunication applications are now receiving considerable attention as they are enabling technologies for improved communication and information access.

Exemplary approaches of speech recognition and translation systems are disclosed in US 2014/288914 A1, US 2009/037171 A1, US 2011/307241 A1 and in Sawaf Hassan: "Automatic Speech Recognition and Hybrid Machine Translation for High-Quality Closed-Captioning and Subtitling for Video Broadcast", Proceedings of the 10th Conference of the Association for Machine Translation in the Americas: Commercial MT User Program, 28 October 2012.

While the underlying technology continuous to improve driving down error rates, the remaining errors, while small in number, can have significant impact and lead to miscommunication and sometimes embarrassment. In many situations such errors are not permissible and require human vetting, review and correction. Consider, for example, the appearance of vulgar language, the misrecognition and mistranslation of names of important actors, the mention of politically charged concepts and words (e.g., racist, sexist, gender, etc.), where an innocent mistake made by an automatic system can be harmful and destructive. Unfortunately, most deployed voice processing systems today are all or nothing: the technology strives to reach perfection in terms of error rates but can never ensure complete satisfaction nor perfection in terms of human understanding and communication. Methods are needed that support a symbiotic collaborative approach between humans and machines to interpretation, that allows the fast and ergonomic correction of such errors in combination with fast learning from and adaptation to such corrections by the machine.

### SUMMARY

In one general aspect, the present invention is directed at computer systems and computer-implemented methods that provide for interactive and incremental post-editing of real-time and off-line speech transcription and translation systems. The system comprises, in various embodiments, four key components.

A first key component is automatic identification of potentially problematic regions in the output (e.g., transcription or translation) that are either likely to be technically processed badly or risky in terms of their content or expression. These are generally indicated by regions of low confidence in the processed result, regions of high disfluency, occurrence of vulgarities, names and acronyms, topically inconsistent terms, and the generation of politically charged concepts/words. Along with technical confidence measures the system also produces an automatic assessment of risk of publication that measures if content is controversial to direct and prioritize a post-editor's attention.

A second key component is intelligent, efficient interfaces that permit multiple editors to correct system output (e.g., transcription or translation) concurrently, collaboratively, efficiently, and simultaneously, so that corrections can be seamlessly inserted and become part of a running presentation.

A third key component is incremental learning and adaptation that allows a system to use the human corrective feedback to deliver instantaneous improvement of system behavior down-stream.

A fourth key component is transfer learning to transfer short-term learning into long term learning if the modifications warrant long-term retention.

According to various aspects, therefore, the present invention is directed to a human (as opposed to machine, formal or programming) language transcription and translation system according to claim 1. The audio session referred to in claim 1 could be, for example, a live audio event or a playback of a recorded audio event (e.g., a speech, presentation, dialog, etc. by one or more speakers).

According to further aspects, the present invention is directed to a method according to claim 7.

These and other benefits that are realizable through various embodiments of the present invention will be apparent from the description that follows.

### DRAWINGS

Various embodiments of the present invention are described by way of example in conjunction with the following figures.
Figure 1A depicts a mobile device in pocket of a user while recording an event.
Figure 1B depicts an interface for a mobile client according to various embodiments of the present invention while recording a live event.
Figure 1C depicts a QR Code and sharable link for sharing access to a live event for recording according to various embodiments of the present invention.
Figure 2A depicts a recording client mobile app interface with an "Off-the-Record" Mute Button according to various embodiments of the present invention.
Figure 2B depicts a post-hoc control interface for a recording client mobile app according to various embodiments of the present invention.
Figures 3A and 3B depict an example of a running, electronic document edited instantaneously by several distributed individuals according to various embodiments of the present invention.
Figures 4 and 7 depict an example of a real-time, web-based user interface for a translation editor according to various embodiments of the present invention.
Figure 5 is a diagram of a computer system according to various embodiments of the present invention.
Figure 6 is a diagram of an incremental post-editing transcription and translation system according to various embodiments of the present invention.

### DESCRIPTION

In our world the only constant is change, and language reflects this perpetual change: concepts change, vocabularies change, names and acronyms change, new ones appear (who ever heard of "COVID-19" prior to January 2020) and old ones disappear (who ever says "Groovy" anymore?). Human and automatic interpreting alike cannot be a static activity, and an interpreter must continually adapt, learn and grow with the world around us. Viewing interpretation as a living, evolving competence is thus at the heart of this design of a successful automated system. A computer system must be unobtrusive, selective, intelligent and efficient in acquiring and exploiting available data resources without imposing cumbersome new requirements for data preparation, extraction or cleaning.

To realize such a vision, the speech interpretation system of the present invention can continuously learn from a variety of data resources. For example, the system can gather and learn continuously: (i) From text documents in the public domain (news, etc.); (ii) From text documents that pertain directly or are related to the specific speech or lecture in progress (slides, reports, agendas, similar web pages); and last not least, (iii) from individual user correction and user intervention during a lecture, by one or multiple users.

To be effective in practice, learning must also respond to different time periods, granularity and must consider the useful life of information. A new concept or word in the news (e.g., "COVID-19"), for example, may burst on the scene and may be required as a permanent addition to the system, but a name of a speaker or an acronym in one speech alone, may potentially only be of interest during the course of a single lecture (a name or an acronym, for example) and should be forgotten thereafter. Either way, however, the impact of learning must be instantaneous: if a word or concept was noted as important in the beginning of a lecture, it must be available for the rest of the lecture as well (it is genuinely annoying to correct it repetitively, if the learning involves user input).

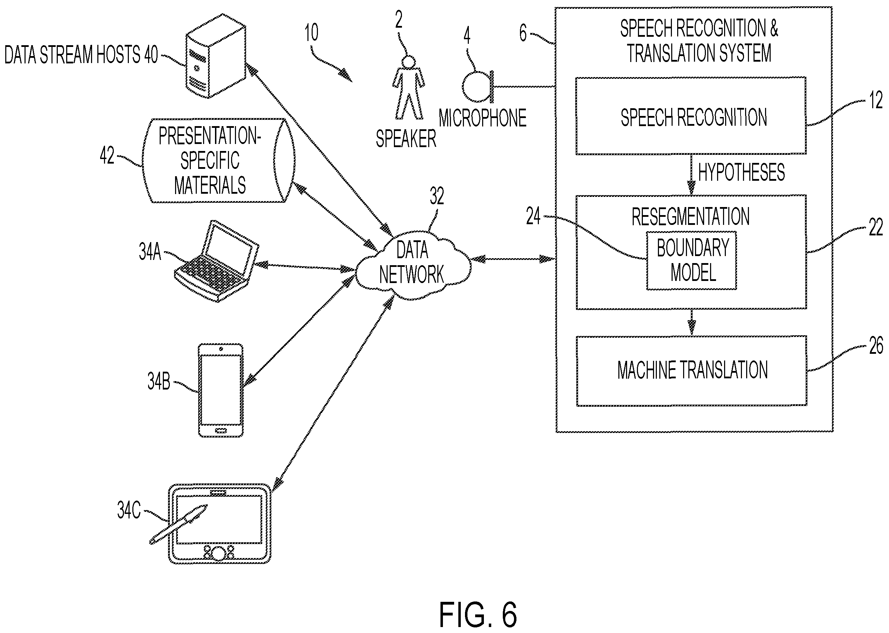

A block diagram of a transcription/translation system 10 is shown in Figure 6 according to various embodiments of the present invention. Audible speech or output (e.g., lecture, interview, etc.) by a speaker 2 is picked up by a microphone 4. Figure 6 shows a single speaker 2 for illustrative purposes and it should be recognized that the systems and methods of the present invention could be used for speeches, seminars, presentations, conversations, meetings, etc. by one or multiple speakers. The audible output may be, for example, part of a live or recorded speech, lecture or presentation by the speaker; a live or recorded voice dialog between the speaker and another speaker(s); a recording of the speaker's audible output, such as an audio recording or a multimedia recording (e.g., a video or movie).

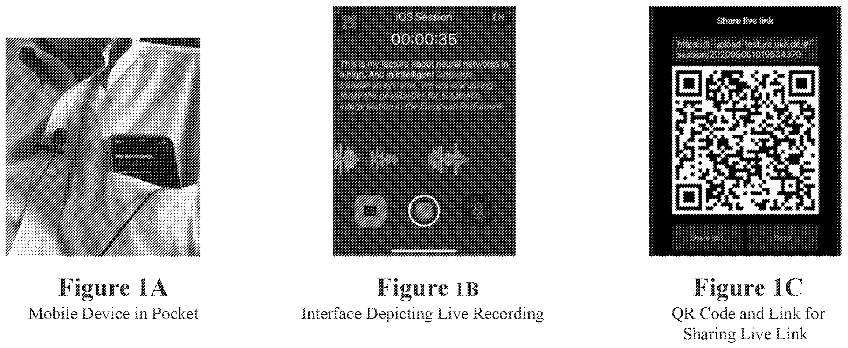

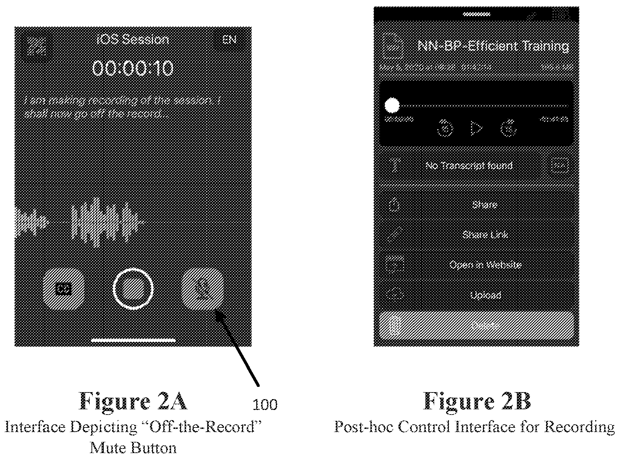

The speech by the speaker 2 is in a first human (as opposed to computer programming) language (e.g., German). The audio picked up by the microphone 4 is input to a computer-implemented speech recognition and translation system 6. The microphone 4 could be, for example, a microphone integrated into a mobile device (e.g., a smartphone, tablet computer, or laptop; see Figures 1A-C and 2A-B) or a discrete microphone system in the vicinity of the speaker 2 while the speaker 2 is making a speech/presentation. The microphone 4 may have a wired or wireless connection to the speech recognition and translation system 6. For example, where the microphone 4 is a component of a mobile device, the mobile device may be in communication with the speech recognition and translation system 6 via a wireless communication link such as a WiFi network, a Bluetooth communication link, or a cellular phone network.

A speech recognition unit 12 produces partial hypotheses. The hypotheses are merged, filtered and resegmented by a resegmentation unit 22 using a boundary model 24 to generate a transcription of the speech in the first human language (e.g., the language in which the speaker was speaking). The processed hypotheses (e.g., transcription) are transferred to a machine translation unit 26 for translation into a second human language (e.g., English). In various embodiments, one speech recognition and translation system 6 is used for each language that the speaker's speech is translated into. In other embodiments, the speech recognition and translation system 6 could have multiple translation units 26-one for each human language to which the speaker's speech is to be translated into.

As shown in Figure 6, the system 10 can comprise a plurality of user devices in communication with the speech recognition and translation system 6 via a data network 32. The user devices are depicted for illustrative purposes in Figure 6 as mobile devices, such as a laptop computer 34A, a smartphone 34B and a tablet computer 34C. The user devices 34A-C can be used for two purposes. First, in a presentation mode, the transcription and/or translation of the speaker's speech generated by the speech recognition and translation system 6 may be transmitted to and displayed on the mobile devices 34A-C in real-time as the speaker 2 makes the speech. Second, in an editing mode, some of the users of the user devices may be editors of the transcription and/or translation and provide post-editing updates and corrections to the speech recognition and translation system 6 (via the data network 32) so that that the on-going transcription and/or translation of the speaker's speech, prepared by the speech recognition and translation system 6, can incorporate and/or adopt the editors' updates and corrections.

The data network 32 may comprise or include, for example, any suitable computer data network, or combination of computer data networks, such as a LAN, a WAN, the Internet, etc. The data network 32 may comprise wired (e.g., Ethernet) and/or wireless (e.g., WiFi, Bluetooth, cellular) ad hoc or infrastructure networks and/or communication links. User devices other than the mobile devices 34A-C illustratively depicted in Figure 6 could also be used. For example, a user may use a PC that has a wired network connection to the speech recognition and translation system 6. Also, other types of mobile devices could be used, such as a wearable computer (e.g., a smart watch).

The editing and presentation interfaces provided by the user devices (e.g., the mobile devices 34A-C) could be provided by browser software on the user devices such that the real-time transcription and/or translation and/or the post-editing interfaces are provided by web pages served by the speech recognition and translation system 6 (which may include a web server, not shown, for serving the web pages). The user interface could also be provided on the user devices 34A-C via a dedicated software application installed on and executed by the user device (e.g., a mobile app on a mobile device 34A-C). In that case, the speech recognition and translation system 6 may comprise an application server (not shown) for serving the transcription and/or translations to the mobile apps. The webpages and/or mobile apps may use HTML5, CSS, TypeScript, JavaScript or web techniques and programming languages.

Figure 6 also shows, for example, that the speech recognition and translation system 6 can receive data (e.g., text, voice and/or video) from, for example, various Internet data stream hosts 40 (e.g., website servers). The data from the data stream hosts 40 can be used to update the model(s) of the speech recognition system 12; the boundary model 23 of the resegmentation system 22; and/or the model(s) of the machine translation system 26. The data from the data streams 40 can be retrieved by the speech recognition and translation system 6 periodically, e.g., daily, in order to update the models accordingly.

The speech recognition and translation system 6 can also update the models of the speech recognition and translation system 6 based on presentation-specific materials. These materials may be, for example, electronic documents that are stored in a database 42 accessible by the speech recognition and translation system 6 via the data network 32. The electronic documents may comprise, for example, agenda, background reports and/or presentation materials (e.g., slides) relevant to the speech/presentation given by the speaker 2. Preferably, the database 42 is updated with the relevant electronic documents for the presentation prior to the presentation by the speaker 2, so that the models of the speech recognition and translation system 6 can also be updated prior to the presentation by the speaker 2.

The transcription/translation system 10 according to the present invention can include long-term and short-term learning algorithms, as well as effective user-interfaces that link learning systems with the workflow of an institution to instantiate continuous learning while minimizing human attention and requiring little or no technical expertise by the operator. These algorithm can be used for both the transcription and translation systems.

Regarding long term learning, the large volumes of data (text, voice and video) produced today (e.g., the data stream hosts 40) provides a unique opportunity for the speech recognition and translation system 6 to learn and adapt on a daily basis over large streams of data. Such learning includes supervised (if ground truth or transcripts are provided), semi-supervised as well as unsupervised methods, suitable for training, data-augmentation and adaptation. Learning on large evolving data streams can be carried out on a daily basis to inform the speech recognition and translation system 6 of the vocabulary du jour, and of the topics of ongoing discussion. In addition to news sources, the speech recognition and translation system 6 can adapt it models based documents in the database 42, which can include agendas, background reports and presentation materials for adaptation and preparation for the speaker's speech/presentation. Similarly, periodic acoustic training of the models of the speech recognition and translation system 6 can be carried out periodically over large data repositories of transcribed, un-transcribed and partially transcribed data. Continuing adaptation runs permit improvements not only for unusual vocabularies but also to typical accents and noise conditions found in different deployments or venues. Such training runs can be initially be hosted, monitored and accompanied by a R&D team to the models of the systems 12, 22 and 26 for the languages, typical accents, vocabularies and noise environments of the use case. The speech recognition and translation system 6 is then ready for incremental session-by-session learning in the steady state.

Regarding session-by-session incremental learning, for any recording session, temporary, local learning can be applied and informed by humans (operators, staff, or crowd-sourced, depending on the criticality of the event), as well as by locally available datastreams 40 and information resources 42. These uses can use, for example, mobile devices 34A-C to communicate with the speech recognition and translation system 6. This "on-the-fly" incremental learning can operate in several steps.

A first step can be session-based a priori learning. In this first step, locally available information about speakers, topics and suitable background materials pertaining to a planned speech or session, is applied prior to an event, to train, prepare and adapt all system components (e.g., the systems 12, 22, 26) to an anticipated presentation by the speaker 2. For example, names, acronyms, and special terms may already appear in the agenda or in reports (e.g., stored in the database 42) that are ancillary to a scheduled presentation. Modifications can thus already be made to system vocabularies or models *prior* to the anticipated session or lecture. But not everything can be predicted a priori and remaining errors will need human input and need to be treated for a high-quality product.

A second step can be confidence-based alerts. Remaining errors in the transcription and/or translation can be flagged automatically by low confidence scores or by the occurrence of inconsistent words or expressions during an ongoing lecture. The significance of each of these occurrences can also be flagged so as to better direct attention of a human operator at a user device to segments that really matter (for example a noun or a name will be more significant than an uncertain article). For example, the speech recognition and translation system 6 can be programmed to flag segments of the transcription and/or translation of the speaker's speech where the speech recognition and translation system 6 computes a low confidence score (e.g., below a threshold level) for a particular segment of the transcription or the translation as the case may be. A human expert editor can then make a correction if warranted in either the transcription or the translation, and that correction can be transferred to the system's short-term learning so that on an on-going basis during the remainder of the speaker's speech, presentation, etc., the correct can be made automatically by the speech recognition and translation system 6.

A second category or alerts is aiming at high-risk outputs in the transcription and/or translation that need to be reviewed by humans before publication or broadcasting of the transcription and/or translation. Such high-risk events include vulgar language, insults, sexist, racist language, hate speech, politically or socially charged concepts and words (e.g. "concentration camp", "rape", "assault", etc.). Such concepts require a political vetting to assure that the speaker actually meant to say what he/she said and that an appropriate output interpretation equivalent in nuance, scope and gravity is chosen. Such decisions are best made by professional interpretation experts operating in an editor mode on their user devices for the transcription and/or translation of the presentation, and the high-risk based alerts will enable experts to quickly attend to these difficult decisions and leave the mundane to the speech recognition and translation system 6.

Another step can be human post-editing. Human editors (either assigned on staff or crowd-sourced) operating the user devices (e.g., mobile devices 34A-C) are then introduced to the speech recognition and translation system 6 to correct remaining errors or post-edit risky words/concepts in the transcription and/or translation. Such words cannot be ignored and require human correction. For example, a word like "Remdesivir" (an experimental drug in the COVID-19 pandemic) may appear and may not be captured correctly in an ongoing presentation, but it is quite important that the word is properly transcribed and translated for readability of the output. Human post-editing preferably corrects this error and the corrected text is then immediately inserted and broadcast to all participants. An interface provided by the mobile devices 34A-C according to the present invention allows for such post-editing of the transcription and/or translation. The implementation of the editing interface permits multiple humans to correct errors concurrently, so that the transcription and/or translation can be modified by several staff members and improved collaboratively and asynchronously. Similarly, post-editors may be assigned to monitor and correct multiple sessions concurrently.

Another step can be Short-Term Learning. Once mentioned, a new word (consider the example "Remdesivir") is quite likely to reappear in the same presentation or session by the speaker 2, and any correction made by a human expert should have immediate effect on the speech recognition and translation system's ongoing speech recognition and translation processing, so that future occurrences in the same session or lecture do not require repeated post-editing. To achieve this, the speech recognition and translation system 6 of the present invention can apply short-term learning, including dynamic modification and/or insertion of words, names, acronyms in the original speech recognition and/or subsequent translation, or adjustments of parameters of the models of the speech recognition and translation system 6. The learning can be both immediate and incremental. For example, after each correction the speech recognition and translation system 6 can updates the behavior of the transcriber (e.g., the automatic speech recognition module) 12 and translator (e.g., machine translation module) 26 moving forward during the rest of the audio session by the speaker. This is to avoid having the speech recognition and translation system 6 make the same mistake over and over again during the transcription and/or translation of the audio session. For example, the speech recognition and translation system 6 can correct a misrecognized or mistranslated word, such as an unusual term like "Remdesivir" (or a names, place, abbreviation, etc.) so that, going forward for the remainder of the audio session, the transcription and/or translation correction can be made for the remainder of the audio session. The speech recognition and translation system 6 can also bias or reinforce this transcription or translation in its models so that the error does not occur in the rest of the lecture/audio session (or at least reduced the likelihood of the error repeating). If the term (e.g., "Remdesivir") is misrecognized by the transcriber or the translator, an editor can correct it at the first instance and the transcriber or translator, as the case may be, of the speech recognition and translation system 6, with the updated, biased model(s), makes the correction for all instances going forward. Where there error is in the recognizer, the first corrected instance can be re-translated and the correct translation of the corrected term can be used going forward.

This short term/incremental learning is often valuable for names for people, places or things. Names are often transcribed and/or translated erroneously, yet a particular name may be repeated throughout the speech/presentation. It is also valuable for homophones; the wrong homophone could be used in the transcription/translation. If not corrected, the name or homophone will appear incorrectly throughout the transcription/translation. With embodiments of the present invention, once the expert editor enters a correction for the name or homophone early in the speech/presentation, the speech recognition and translation system 6 can adjust its parameter models to make the correction for the remainder of the speech/presentation. It is also valuable for words in the spoken language that have two different meanings, and those two different meanings translate to different words in another language. For example, the English word "nail" can mean a small metal spike (e.g., that is hit by a hammer) or a covering on the tip of one's finger (e.g., a finger nail). The Spanish word for the first type of nail is "clavo" whereas the Spanish word for the second meaning is "ufia." For a speech about hammers and nails, the translation into Spanish should use "clavo" instead of "uña." If "uña" is used in the raw translation, the expert editor can change it to "clavo" and that incremental change can be transferred to the system's short-term memory so that the remainder of the translation can correctly use "clavo."

Yet another step can comprise Transfer Learning, e.g., from Short-Term to Long-Term. There is generally no good way of telling whether a new word, (e.g. "Remdesivir"), acronym, accent, or concept should have long term implications and whether it should influence long term learning. An overly hasty retraining of the models of the speech recognition and translation system 6 using such new input can prove counterproductive and even lead to performance degradation or forgetting of lasting and proven long-term knowledge. A long-term learning strategy according to embodiments of the present invention, therefore, retains all such corrections to include them in a balanced manner for long-term training, to affect gradual improvements if the data bears it out.

Far beyond addressing only research questions related to recognition and translation performance, a useful interpretation tool usable in online real-time events must also permit users to engage and operate an interpreting system by themselves without generating distractions or interference at moments of great stress. Such systems must support (and not derail) user focus on the discussion at hand. It must, however, also provide for easy access, control, privacy, and confidence in its accuracy.

To achieve all these conflicting goals, the transcription/translation system 10 can include advanced interface features and submodules that are important for deployment in the field. One of the important considerations in the ubiquitous use of a system for cross-lingual communication in a multilingual environment is to provide for alternate recording environments that use the post-editing techniques of the present invention. Some environments may be well served by semi-permanent installations into the audio system of a conference halls or auditoria, but in many cases a permanent installation is not possible as it is not predictable (external speeches, outside venues, private conference rooms), or not desirable (personal offices, travel, etc.). A system infrastructure according to the present invention, therefore, includes multiple recording clients that operate as an installation in a lecture hall with automatic scheduling functions, or on mobile devices 34A-C for video conferences, or on mobile apps on the mobile devices 34A-C for mobile lecture support. Alternatively, videos, audio records and prerecorded events can also be uploaded to the servers of the speech recognition and translation system 6 via a web client.

The language translation mobile client running, for example, on the mobile devices 34A-C, according to the present invention can be designed with mobility in mind. It can be provided as a mobile app for a smart phone or table computer (or other mobile device) that doubles as a recording app and allows anyone, anywhere, to take advantage of the interpreting capabilities through their own phone (or other mobile device as the case may be). By default, the recording client can be a recording app that makes a backup recording while generating multilingual captioning/interpreting on demand. The output of close captioning and interpreting can be shared with an audience on the spot at the beginning of a session by way of a QR code, or a sharable URL. The app can be activated once in the beginning of an event (interview, speech, etc.). Close captioning can be selected or deselected as desired on the phone (or other mobile device) and the phone can then disappear into one's pocket without requiring further attention. The phone is then worn like a wireless microphone with remote transcription and translation capabilities. Figure 1A shows an example of a smartphone with the mobile app in a user's pocket; Figure 1B shows an example of the mobile app interface with recording capabilities; and Figure 1C shows a QR code that a user could share with another user, and where the QR code encodes a URL to closed captioning and/or translation of a speech being recorded by the mobile app.

Relating to privacy, all human speech includes informal and formal parts that a user wishes to control during and after a speech or event. Years of experience have sensitized development for this need and the present invention can include simple-to-use privacy control functions. For example, as shown in Figure 2A, the recording client mobile app can include an "off-the-Record" muting button 100 that is easily applied by a speaker to de/activate recording and transmission of sound and thus allow for control without technical hassles. The mobile app can also provide for control post-hoc (after the event), by allowing the user or his/her staff to post-edit, delete or redact the record prior to release. A record can also be shared, deleted uploaded, published, locally saved, remotely saved, by simple controls from the mobile device, as shown in the example interface shown in Figure 2B.

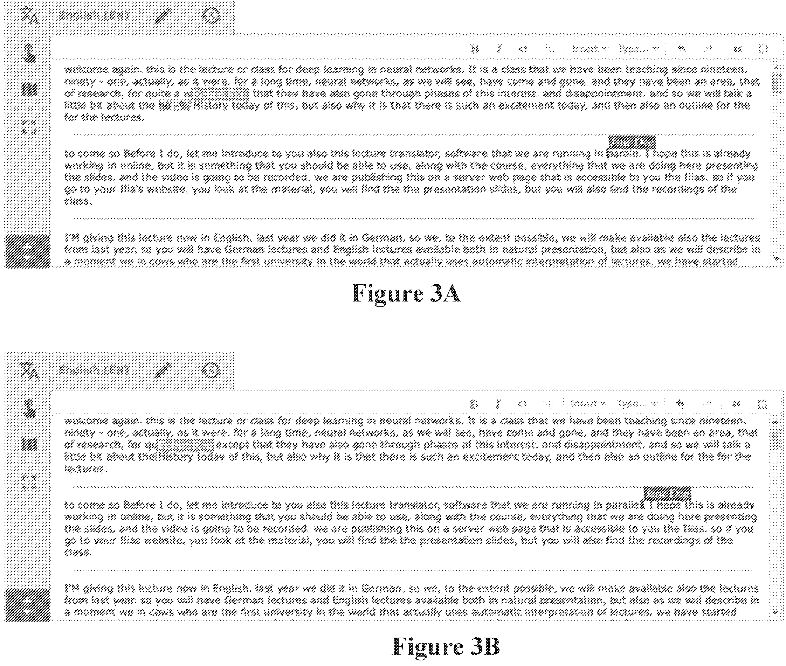

For symbiotic quality control, the transcription/translation system 10 according to embodiments of the present invention can include interface features that make quality control efficient, flexible and easy to use. The transcription/translation system 10 can provide post-editing user interfaces for the mobile devices 34A-C for the recognition (in the original language) or the translation output (for the translated-to language) "on-the-fly" (e.g., during the speech) by multiple asynchronous editors. A running document can thus be edited instantaneously by several distributed individuals and the modifications are immediately visible to all. For example, Figures 3A and 3B show examples of the post-editing interface in various embodiments. In Figure 3A, user "Robert Roe" identified "ho -%" in the transcript as erroneous and user "Jane Doe" identified the word "parole" as erroneous. Figure 3B shows that user "Robert Roe" on-the-fly edit was to delete "ho -%" in the transcript and user "Jane Doe" changed on-the-fly the word "parole" to "parallel" in the transcript. As shown in the examples of Figures 3A-3B, the editing interface can also show by name or user ID which editors made the changes.

All edits can be stored in a stack of modifications, to allow retrieving prior states or versions of the document. Once changes are committed, the edited text can also be immediately sent to the speech recognition and translation system 6 to effect local, immediate learning (e.g. the inclusion of a word or name in the running document, where the long-term importance of the word is not yet known) while retaining it for long term learning in case it remains a growing or important concept of general importance (e.g. "COVID-19").

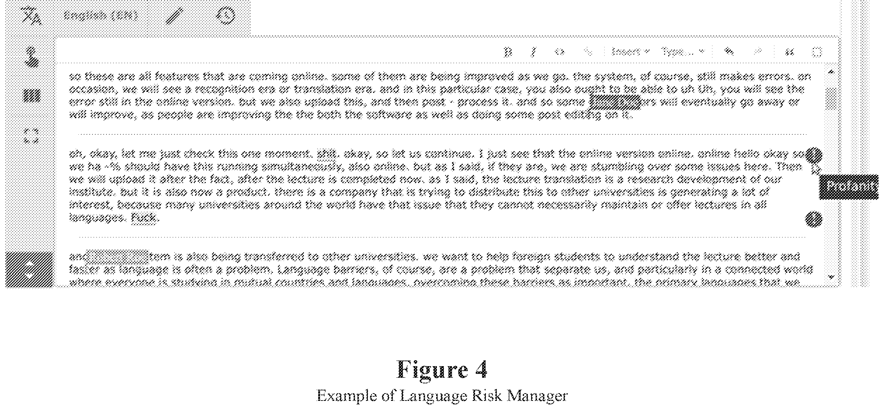

For language risk management, in order to take advantage of the efficiencies gained from automatic recognition and translation, it is impractical for a human operator to always oversee the output from an automatic system, in case intervention is necessary. To alleviate this problem, the speech recognition and translation system 6 can also include Language Risk Management features that process the output text (of either the recognized speech and/or the translation thereof) to determine if human oversight or intervention is warranted. The Language Risk manager of the speech recognition and translation system 6 can generate an alert if one of several risk categories are encountered, including: vulgarities, unusual names, technical terms, politically charged concepts, controversial concepts, hate speech, sexist or racist language, etc. For example, the example interface of Figure 4 shows how potential profanities in the transcription identified by the language risk manager of the speech recognition and translation system 6 can be flagged in user interface of the mobile device. The language risk manager can flag high risk terms by consulting a database (not shown) of high risk terms as each word in the transcript is generated. If a word in the transcript is in the high risk term database, the language risk manager can flag the words in the transcript, as shown in the example of Figure 4.

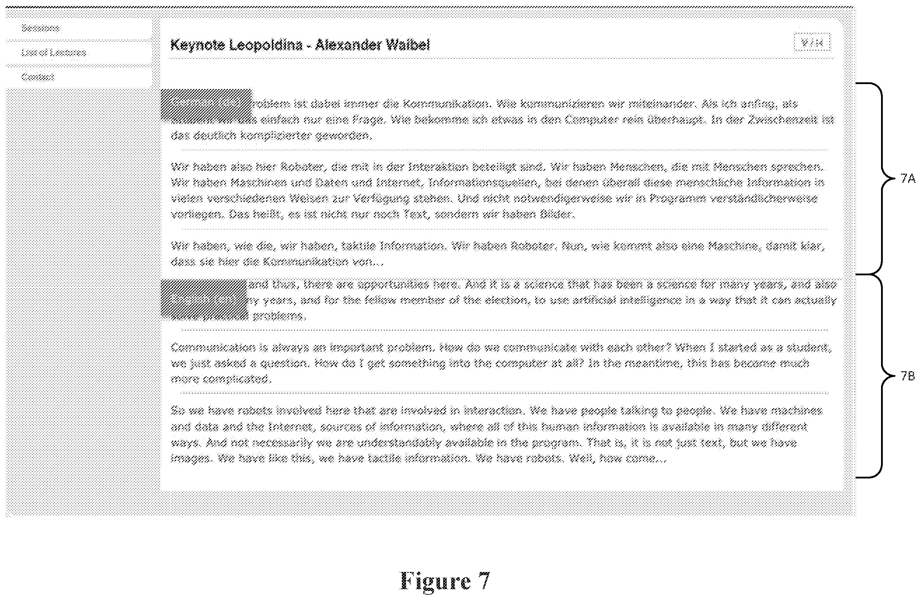

The output from the lecture interpretation steps can be presented in one of several ways: text, speech, or multimedia formats. The most common output in a lecture scenario is to present the transcript of the speech, along with the translation into another language, as shown in example of Figure 7. In this example, the upper portion 7A of the interface shows the transcription in real-time (as fast as the translation system can generate it) as the speaker is speaking in the language being spoken by the speaker (German in this example). Lower portion 7B shows the translation in real-time (as fast as the translation system can generate it) as the speaker is speaking in the translated-to language (English in this example). The lecture translator interface can also provide a selection menu of output languages. The transcriptions can be displayed in text form on a web page or mobile app that a listener can access on his/her laptop or mobile device. If the lecture is presented online, output can be delivered at low latency, sometimes before a speaker has finished speaking a sentence.

For speech/audible output, the speech recognition and translation system 6 may comprise a text-to-speech module that converts the translated text version of the presentation to audio in the translated-to language. The audio can then be streamed by the speech recognition and translation system 6 to an end-user. For multimedia output, the user interface may show the transcription in text, video of the speaker, and/or the audio in the translated-to language.

Since the transcription may include occasional errors, the speech recognition and translation system 6 can incrementally revise its hypotheses as greater context is obtained. In archival mode, the presenter client can present the video of a lecture aligned with the textual transcript and translation. The currently spoken and translated transcripts are highlighted during playback. Furthermore it is possible to search for keywords and jump to the sections of the recording by clicking on the sought after words in the interface, or by clicking on the presentation slides or images corresponding to the speech.

As mentioned above, the speech recognition and translation system 6 may automatically identify potentially problematic regions in the output for post-editing as described above. The potentially problematic regions can be identified by regions of low confidence in the processed result (e.g., transcription and/or translation), regions of high disfluency, occurrence of vulgarities, names and acronyms, topically inconsistent terms, and the generation of politically charged concepts/words. The speech recognition and translation system 6 may identify vulgarities, names and acronyms, topically inconsistent terms, and politically charged concepts/words through a list (e.g., database or file) of such terms/phrases. Along with technical confidence measures the system also produces an automatic assessment of risk of publication that measures if content is controversial to direct and prioritize a post-editor's attention.

As mentioned above, in real-time as the speech/presentation/etc. is being made, one or more editors may edit the transcription and/or translation to make corrections. One or more editors may edit the transcription in the language in which the speaker is speaking (e.g., German) and one or more editors may edit the translations thereof (e.g., English). There could be one or more editors for each language in which the speech is translated into. To promote the validity and integrity of the corrections, the editors may be vetted beforehand so that trusted editors are used preferably. The pre-vetted editors may have password-protected access to the transcriptions/translations so that they can access the raw transcription/translation for correction prior to publication to the consumers. If editors make different corrections to the same word (or phrase) in the original transcription or any of the translations, the speech recognition and translation system 6 may employ a voting scheme to determine which correction to make.

The speech recognition and translation system 6 can generate the transcription and translations during live or recorded speech sessions (e.g. lectures, presentations, etc.) by the speaker 2. For live sessions, the speech recognition and translation system 6 can make the updates to the transcriptions and/or the translations during the live speech by the speaker, e.g., in real time. For recorded sessions, the speech recognition and translation system 6 can make the updates to the transcriptions and/or the translations during a playing of the recorded speech.

To record a speech by the speaker 2, the system can further comprise recording means for recording the audio picked up by the microphone and an acoustic speaker(s) (e.g., loudspeaker or earphone) for playing the recording of the speech by the speaker 2. To record the speaker's speech, the audio picked up by the microphone can be converted, by a codec, to a digital audio file(s) using an suitable audio file format type, such as WAV, AIFF, FLAC, MPEG-4 SLS or ALS, MP3, etc. The digital audio file can be stored in a suitable data storage device, such as RAM, flash, SSD, magnetic memory, etc. The speech recognition and translation system 6 can then decode and play the recorded audio via the acoustic speaker(s).

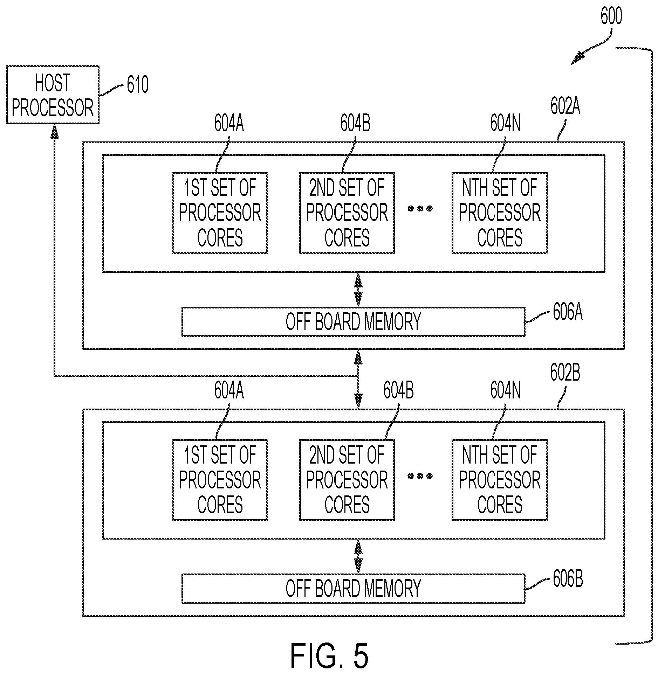

Figure 5 is a diagram of a computer system 600 that could be used to implement the speech recognition and translation system 6 for example. The illustrated computer system 600 comprises multiple processor units 602A-B that each comprises, in the illustrated embodiment, multiple (N) sets of processor cores 604A-N. Each processor unit 602A-B may comprise on-board memory (ROM or RAM) (not shown) and off-board memory 606A. The on-board memory may comprise primary, volatile and/or non-volatile, storage (e.g., storage directly accessible by the processor cores 604A-N). The off-board memory 606A-B may comprise secondary, non-volatile storage (e.g., storage that is not directly accessible by the processor cores 604A-N), such as ROM, HDDs, SSD, flash, etc. The processor cores 604AN may be CPU cores, GPU cores and/or AI accelerator cores.

In other embodiments, the computer system 600 could be implemented with one processor unit that is programmed to perform the functions described above. In embodiments where there are multiple processor units, the processor units could be co-located or distributed. For example, the processor units may be interconnected by data networks, such as a LAN, WAN, the Internet, etc., using suitable wired and/or wireless data communication links. Data may be shared between the various processing units using suitable data links, such as data buses (preferably high-speed data buses) or network links (e.g., Ethernet). In addition, the computer system could be in communication with the users' mobile clients through the Internet, WiFi networks, cellular networks, etc.

The software for the speech recognition and translation system 6 may be implemented in computer software using any suitable computer programming language such as .NET, C, C++, Python, and using conventional, functional, or object-oriented techniques. Programming languages for computer software and other computer-implemented instructions may be translated into machine language by a compiler or an assembler before execution and/or may be translated directly at run time by an interpreter. Examples of assembly languages include ARM, MIPS, and x86; examples of high level languages include Ada, BASIC, C, C++, C#, COBOL, CUDA, Fortran, Java, Lisp, Pascal, Object Pascal, Haskell, ML; and examples of scripting languages include Bourne script, JavaScript, Python, Ruby, Lua, PHP, and Perl.

The examples presented herein are intended to illustrate potential and specific implementations of the present invention. It can be appreciated that the examples are intended primarily for purposes of illustration of the invention for those skilled in the art. Further, it is to be understood that the figures and descriptions of the present invention have been simplified to illustrate elements that are relevant for a clear understanding of the present invention, while eliminating, for purposes of clarity, other elements. While various embodiments have been described herein, it should be apparent that various modifications, alterations, and adaptations to those embodiments may occur to persons skilled in the art with attainment of at least some of the advantages. The disclosed embodiments are therefore intended to include all such modifications, alterations, and adaptations without departing from the scope of the embodiments as set forth herein.

## Claims

1. An incremental post-editing transcription and translation system comprising:
a microphone (4) for picking up audible output by a speaker during an audio session by speaker,
wherein the audible output is in a first human language;
a speech recognition and translation computer system (6) for translating the audible output by the speaker in the first spoken language to a second human language, wherein the speech recognition and translation computer system is in communication with the microphone and wherein the speech recognition and translation computer system comprises:
an automatic speech recognition module (12, 22) for converting the audible output picked up by the microphone to transcribed text in the first human language; and
a language translation module (26) for translating the transcribed text in the first human language to translation text in the second human language;
one or more client devices in communication with the speech recognition and translation computer system, wherein each of the one or more client devices comprises a user interface that, in an editor mode:
is configured to display the transcribed text in the first human language and the translated text in the second human language; and
is configured to accept corrective inputs from a user of each of the one or more client devices, wherein the corrective inputs comprise corrections to at least one of the transcribed text in the first language or the translated text in the second human language; and wherein the speech recognition and translation computer system is for:
receiving the corrective inputs from the users of the one or more client devices; and updating at least one of the automatic speech recognition module or the language translation module based on the received corrective inputs, such that the automatic speech recognition module or the language translation module uses the corrective inputs in generating the transcribed text in the first human language or translating the transcribed text to the second human language for a remainder of the audio session;
**characterized by** the incremental post-editing transcription and translation system further comprising, by language translation module, during the audio session:
identifying a high-risk word in the translated text in the second human language; flagging the high-risk word in the display of the translated text, wherein a high-risk word comprises at least one of vulgar language, insults, sexist or racist language, hate speech, and politically or socially charged concepts and words;
receiving a corrective input from a user of one of the one or more client devices for the high-risk word; and updating a model of the language translation module to use the corrective input for the high-risk word for the audio session.

2. The incremental post-editing transcription and translation system of claim 1, wherein the audio session comprises any one of: a live speech by the speaker; a live lecture by the speaker; a live presentation by the speaker; an audible voice dialog by the speaker with a second speaker; a recording of audible output by the speaker.

3. The incremental post-editing transcription and translation system of claim 1, wherein:
the audio session comprises a live audio session by the speaker; and the speech recognition and translation computer system is configured to generate the transcribed text in the first human language and to translate the transcribed text to the translation text in the second human language during the live audio session;
wherein: the one or more client devices are configured to, during the live audio session, display the translated text and accept the corrective inputs; and the speech recognition and translation computer system is configured to, during the live audio session, receive the corrective inputs and update the language translation module; and
wherein: in the editor mode, the user interface of the one or more client devices is further configured to:
display the transcribed text in the first human language during the audio session; and accept transcribed-text corrective inputs to the displayed transcribed text from the user of each of the one or more client device during the audio session; and
the speech recognition and translation computer system is further configured to: receive the transcribed-text corrective inputs from the users of the one or more client devices during the audio session; and
update the automatic speech recognition module based on the received transcribed-text corrected inputs during the audio session, such that the automatic speech recognition module uses the transcribed-text corrective inputs in recognizing the audible output by the speaker during the audio session.

4. The incremental post-editing transcription and translation system of claim 3, wherein the speech recognition and translation computer system is further configured to, upon receiving a transcribed-text corrective input that is applicable to a portion of the transcribed text, re-translate the portion of the transcribed text to the second human language such that the user interfaces of the one or more client devices display the re-translated portion in the second human language.

5. The incremental post-editing transcription and translation system of claim 1, wherein: The incremental post-editing transcription and translation system further comprises:
storage means for storing a recording of the audio session; and
means for audibly playing the recording of the audio session;
the speech recognition and translation computer system is configured to generate the transcribed text in the first human language and to translate the transcribed text to the translation text in the second human language during a playing of the recorded audio session;
the one or more client devices are configured to, during the playing of the recorded audio session, display the translated text and accept the corrective inputs; and
the speech recognition and translation computer system is configured to, during the playing of the recorded audio session, receive the corrective inputs and update the language translation module.

6. The incremental post-editing transcription and translation system of claim 5, wherein:
in the editor mode, the user interface of the one or more client devices is further configured to:
display the transcribed text in the first human language during the playing of the recorded audio session; and
accept transcribed-text corrective inputs to the displayed transcribed text from the user of each of the one or more client device during the playing of the recorded audio session; and
the speech recognition and translation computer system is further configured to: receive the transcribed-text corrective inputs from the users of the one or more client devices during the playing of the audio session;
update the automatic speech recognition module based on the received transcribed-text corrected inputs during the playing of the recorded audio session, such that the automatic speech recognition module uses the transcribed-text corrective inputs in recognizing the audible output by the speaker during the playing of the recorded audio session; and
upon receiving a transcribed-text corrective input that is applicable to a portion of the transcribed text, re-translate the portion of the transcribed text to the second human language such that the user interfaces of the one or more client devices display the re-translated portion in the second human language.

7. A method comprising:
picking up, by a microphone (4), audible output by a speaker during an audio session by speaker, wherein the audible output is in a first human language;
translating, by a speech recognition and translation computer system (6), the audible output by the speaker in the first spoken language to a second human language, wherein the speech recognition and translation computer system is in communication with the microphone and wherein the speech recognition and translation computer system comprises:
an automatic speech recognition module (12, 22) that converts the audible output picked up by the microphone to transcribed text in the first human language; and
a language translation module (26) for translating the transcribed text in the first human language to translation text in the second human language;
displaying, by one or more client devices in communication with the speech recognition and translation computer system, the transcribed text in the first human language and the translated text in the second human language;
accepting, by the one or more client devices, corrective inputs from a user of each of the one or more client devices, wherein the corrective inputs comprise corrections to at least one of the transcribed text in the first human language and the translated text in the second human language;
receiving, by the speech recognition and translation system, the corrective inputs from the users of the one or more client devices; and
updating, by the speech recognition and translation system, at least one of the automatic speech recognition module or the language translation module based on the received corrective inputs, such that the automatic speech recognition module or the language translation module uses the corrective inputs in generating the transcribed text in the first human language or translating the transcribed text to the second human language for a remainder of the audio session;
**characterized in that** the method further comprises, by language translation module, during the audio session:
identifying a high-risk word in the translated text in the second human language; flagging the high-risk word in the display of the translated text, wherein a high-risk word comprises at least one of vulgar language, an insult, sexist or racist language, hate speech, and politically or socially charged concepts and words;
receiving a corrective input from a user of one of the one or more client devices for the high-risk word; and updating a model of the language translation module to use the corrective input for the high-risk word for the audio session.

8. The incremental post-editing transcription and translation system of claim 1 or the method of claim 7, wherein:
the audio session comprises a live audio session by the speaker; and
the speech recognition and translation computer system is configured to generate the transcribed text in the first human language and to translate the transcribed text to the translation text in the second human language during the live audio session.

9. The incremental post-editing transcription and translation system of claim 8 or the method of claim 8, wherein:
the one or more client devices are configured to, during the live audio session, display the translated text and accept the corrective inputs; and
the speech recognition and translation computer system is configured to, during the live audio session, receive the corrective inputs and update the language translation module.

10. The incremental post-editing transcription and translation system of claim 1 or the method of claim 7, further comprising, after receiving the corrective inputs from the users of the one or more client devices, updating, by the language translation module, the translated text displayed on the user interface session to include, in a presentation mode, the corrective inputs.

11. The incremental post-editing transcription and translation system of claim 10 or the method of claim 10, further comprising, simultaneously by the user interface, in the presentation mode, the text in the first human language and the translated text in the second human language.

12. The incremental post-editing transcription and translation system of claim 1 or the method of claim 7, further comprising, after the audio session, by the language translation module, transferring the corrective inputs to a long term memory for the language translation module.

13. The incremental post-editing transcription and translation system of claim 9 or the method of claim 9, further comprising, by language translation module, during the audio session:
identifying a low-confidence word in the translated text in the second human language where the language translation module has a confidence level for the low-confidence word below a threshold confidence level;
flagging the low-confidence word in the display of the translated text; receiving a corrective input from a user of one of the one or more client devices for the low-confidence word; and
updating a model of the language translation module to use the corrective input for the low-confidence word for the audio session.

14. The method of claim 9, wherein:
in the editor mode, by the user interface of the one or more client devices: displaying the transcribed text in the first human language during the audio session; and
accepting transcribed-text corrective inputs to the displayed transcribed text from the user of each of the one or more client device during the audio session; and by the speech recognition and translation computer system:
receiving the transcribed-text corrective inputs from the users of the one or more client devices during the audio session; and
updating the automatic speech recognition module based on the received transcribed-text corrected inputs during the audio session, such that the automatic speech recognition module uses the transcribed-text corrective inputs in recognizing the audible output by the speaker during the audio session;
the method optionally comprising, by the speech recognition and translation computer system, upon receiving a transcribed-text corrective input that is applicable to a portion of the transcribed text, re-translating the portion of the transcribed text to the second human language such that the user interfaces of the one or more client devices display the re-translated portion in the second human language.

## Patentansprüche

1. Inkrementelles Post-Editing-Transkriptions- und Übersetzungssystem, umfassend:
ein Mikrofon (4) zum Aufnehmen einer hörbaren Ausgabe durch einen Sprecher während einer Audiositzung durch den Sprecher,
wobei die hörbare Ausgabe in einer ersten menschlichen Sprache ist;
ein Spracherkennungs- und Übersetzungscomputersystem (6) zum Übersetzen der hörbaren Ausgabe durch den Sprecher in der ersten gesprochenen Sprache in eine zweite menschliche Sprache, wobei das Spracherkennungs- und Übersetzungscomputersystem mit dem Mikrofon in Kommunikation steht und wobei das Spracherkennungs- und Übersetzungscomputersystem umfasst:
ein automatisches Spracherkennungsmodul (12, 22) zum Konvertieren der durch das Mikrofon aufgenommenen hörbaren Ausgabe in transkribierten Text in der ersten menschlichen Sprache; und
ein Sprachübersetzungsmodul (26) zum Übersetzen des transkribierten Textes in der ersten menschlichen Sprache in Übersetzungstext in der zweiten menschlichen Sprache;
eine oder mehrere Client-Vorrichtungen in Kommunikation mit dem Spracherkennungs- und Übersetzungscomputersystem, wobei jede der einen oder mehreren Client-Vorrichtungen eine Benutzeroberfläche umfasst, die in einem Editor-Modus:
konfiguriert ist, um den transkribierten Text in der ersten menschlichen Sprache und den übersetzten Text in der zweiten menschlichen Sprache anzuzeigen; und
konfiguriert ist, um korrigierende Eingaben von einem Benutzer jeder der einen oder mehreren Client-Vorrichtungen anzunehmen, wobei die korrigierenden Eingaben Korrekturen an mindestens einem von dem transkribierten Text in der ersten Sprache oder dem übersetzten Text in der zweiten menschlichen Sprache umfassen; und wobei das Spracherkennungs- und Übersetzungscomputersystem bestimmt ist zum:
Empfangen der korrigierenden Eingaben von den Benutzern der einen oder mehreren Client-Vorrichtungen; und
Aktualisieren mindestens eines von dem automatischen Spracherkennungsmodul oder dem Sprachübersetzungsmodul basierend auf den empfangenen korrigierenden Eingaben, sodass das automatische Spracherkennungsmodul oder das Sprachübersetzungsmodul die korrigierenden Eingaben beim Erzeugen des transkribierten Textes in der ersten menschlichen Sprache oder beim Übersetzen des transkribierten Textes in die zweite menschliche Sprache für einen Rest der Audiositzung verwendet;
**dadurch gekennzeichnet, dass** das inkrementelle Post-Editing-Transkriptions- und Übersetzungssystem durch das Sprachübersetzungsmodul während der Audiositzung ferner umfasst:
Identifizieren eines Hochrisikowortes in dem übersetzten Text in der zweiten menschlichen Sprache; Markieren des Hochrisikowortes in der Anzeige des übersetzten Textes, wobei ein Hochrisikowort mindestens eines von vulgärer Sprache, Beleidigungen, sexistischer oder rassistischer Sprache, Hassrede und politisch oder sozial aufgeladenen Konzepten und Wörtern umfasst;
Empfangen einer korrigierenden Eingabe von einem Benutzer von einer der einen oder mehreren Client-Vorrichtungen für das Hochrisikowort; und Aktualisieren eines Modells des Sprachübersetzungsmoduls, um die korrigierende Eingabe für das Hochrisikowort für die Audiositzung zu verwenden.

2. Inkrementelles Post-Editing-Transkriptions- und Übersetzungssystem nach Anspruch 1, wobei die Audiositzung eines von Folgendem umfasst: eine Live-Rede durch den Sprecher; eine Live-Vorlesung durch den Sprecher; eine Live-Präsentation durch den Sprecher; einen hörbaren Sprachdialog durch den Sprecher mit einem zweiten Sprecher; eine Aufzeichnung einer hörbaren Ausgabe durch den Sprecher.

3. Inkrementelles Post-Editing-Transkriptions- und Übersetzungssystem nach Anspruch 1, wobei: die Audiositzung eine Live-Audiositzung durch den Sprecher umfasst; und das Spracherkennungs- und Übersetzungscomputersystem konfiguriert ist, um während der Live-Audiositzung den transkribierten Text in der ersten menschlichen Sprache zu erzeugen und den transkribierten Text in den Übersetzungstext in der zweiten menschlichen Sprache zu übersetzen;
wobei: die eine oder mehreren Client-Vorrichtungen konfiguriert sind, um während der Live-Audiositzung den übersetzten Text anzuzeigen und die korrigierenden Eingaben anzunehmen; und das Spracherkennungs- und Übersetzungscomputersystem konfiguriert ist, um während der Live-Audiositzung die korrigierenden Eingaben zu empfangen und das Sprachübersetzungsmodul zu aktualisieren; und
wobei: in dem Editor-Modus die Benutzeroberfläche der einen oder mehreren Client-Vorrichtungen ferner konfiguriert ist zum:
Anzeigen des transkribierten Textes in der ersten menschlichen Sprache während der Audiositzung; und
Annehmen von korrigierenden Eingaben für den transkribierten Text für den angezeigten transkribierten Text von dem Benutzer jeder der einen oder mehreren Client-Vorrichtungen während der Audiositzung; und
das Spracherkennungs- und Übersetzungscomputersystem ferner konfiguriert ist zum: Empfangen der korrigierenden Eingaben für den transkribierten Text von den Benutzern der einen oder mehreren Client-Vorrichtungen während der Audiositzung; und
Aktualisieren des automatischen Spracherkennungsmoduls basierend auf den empfangenen korrigierten Eingaben für den transkribierten Text während der Audiositzung, sodass das automatische Spracherkennungsmodul die korrigierenden Eingaben für den transkribierten Text beim Erkennen der hörbaren Ausgabe durch den Sprecher während der Audiositzung verwendet.

4. Inkrementelles Post-Editing-Transkriptions- und Übersetzungssystem nach Anspruch 3, wobei das Spracherkennungs- und Übersetzungscomputersystem ferner konfiguriert ist, um nach dem Empfangen einer korrigierenden Eingabe für den transkribierten Text, die auf einen Teil des transkribierten Textes anwendbar ist, den Teil des transkribierten Textes in die zweite menschliche Sprache neu zu übersetzen, sodass die Benutzeroberflächen der einen oder mehreren Client-Vorrichtungen den neu übersetzten Teil in der zweiten menschlichen Sprache anzeigen.

5. Inkrementelles Post-Editing-Transkriptions- und Übersetzungssystem nach Anspruch 1, wobei: das inkrementelle Post-Editing-Transkriptions- und Übersetzungssystem ferner umfasst:
Speichermittel zum Speichern einer Aufzeichnung der Audiositzung; und
Mittel zum hörbaren Abspielen der Aufzeichnung der Audiositzung;
das Spracherkennungs- und Übersetzungscomputersystem konfiguriert ist, um während eines Abspielens der aufgezeichneten Audiositzung den transkribierten Text in der ersten menschlichen Sprache zu erzeugen und den transkribierten Text in den Übersetzungstext in der zweiten menschlichen Sprache zu übersetzen;
die eine oder mehreren Client-Vorrichtungen konfiguriert sind, um während des Abspielens der aufgezeichneten Audiositzung den übersetzten Text anzuzeigen und die korrigierenden Eingaben anzunehmen; und
das Spracherkennungs- und Übersetzungscomputersystem konfiguriert ist, um während des Abspielens der aufgezeichneten Audiositzung die korrigierenden Eingaben zu empfangen und das Sprachübersetzungsmodul zu aktualisieren.

6. Inkrementelles Post-Editing-Transkriptions- und Übersetzungssystem nach Anspruch 5, wobei:
in dem Editor-Modus die Benutzeroberfläche der einen oder mehreren Client-Vorrichtungen ferner konfiguriert ist zum:
Anzeigen des transkribierten Textes in der ersten menschlichen Sprache während des Abspielens der aufgezeichneten Audiositzung; und
Annehmen von korrigierenden Eingaben für den transkribierten Text für den angezeigten transkribierten Text von dem Benutzer jeder der einen oder mehreren Client-Vorrichtungen während des Abspielens der aufgezeichneten Audiositzung; und
das Spracherkennungs- und Übersetzungscomputersystem ferner konfiguriert ist zum: Empfangen der korrigierenden Eingaben für den transkribierten Text von den Benutzern der einen oder mehreren Client-Vorrichtungen während des Abspielens der Audiositzung;
Aktualisieren des automatischen Spracherkennungsmoduls basierend auf den empfangenen korrigierten Eingaben für den transkribierten Text während des Abspielens der aufgezeichneten Audiositzung, sodass das automatische Spracherkennungsmodul die korrigierenden Eingaben für den transkribierten Text beim Erkennen der hörbaren Ausgabe durch den Sprecher während des Abspielens der aufgezeichneten Audiositzung verwendet; und
nach dem Empfangen einer korrigierenden Eingabe für den transkribierten Text, die auf einen Teil des transkribierten Textes anwendbar ist, Neuübersetzen des Teils des transkribierten Textes in die zweite menschliche Sprache, sodass die Benutzeroberflächen der einen oder mehreren Client-Vorrichtungen den neu übersetzten Teil in der zweiten menschlichen Sprache anzeigen.

7. Verfahren, umfassend:
Aufnehmen, durch ein Mikrofon (4), einer hörbaren Ausgabe durch einen Sprecher während einer Audiositzung durch den Sprecher, wobei die hörbare Ausgabe in einer ersten menschlichen Sprache ist;
Übersetzen, durch ein Spracherkennungs- und Übersetzungscomputersystem (6), der hörbaren Ausgabe durch den Sprecher in der ersten gesprochenen Sprache in eine zweite menschliche Sprache, wobei das Spracherkennungs- und Übersetzungscomputersystem mit dem Mikrofon in Kommunikation steht und wobei das Spracherkennungs- und Übersetzungscomputersystem umfasst:
ein automatisches Spracherkennungsmodul (12, 22), das die durch das Mikrofon aufgenommene hörbare Ausgabe in transkribierten Text in der ersten menschlichen Sprache konvertiert; und
ein Sprachübersetzungsmodul (26) zum Übersetzen des transkribierten Textes in der ersten menschlichen Sprache in Übersetzungstext in der zweiten menschlichen Sprache;
Anzeigen, durch eine oder mehrere Client-Vorrichtungen in Kommunikation mit dem Spracherkennungs- und Übersetzungscomputersystem, des transkribierten Textes in der ersten menschlichen Sprache und des übersetzten Textes in der zweiten menschlichen Sprache;
Annehmen, durch die eine oder mehreren Client-Vorrichtungen, von korrigierenden Eingaben von einem Benutzer jeder der einen oder mehreren Client-Vorrichtungen,
wobei die korrigierenden Eingaben Korrekturen an mindestens einem von dem transkribierten Text in der ersten menschlichen Sprache und dem übersetzten Text in der zweiten menschlichen Sprache umfassen;
Empfangen, durch das Spracherkennungs- und Übersetzungssystem, der korrigierenden Eingaben von den Benutzern der einen oder mehreren Client-Vorrichtungen; und
Aktualisieren, durch das Spracherkennungs- und Übersetzungssystem, mindestens eines von dem automatischen Spracherkennungsmodul oder dem Sprachübersetzungsmodul basierend auf den empfangenen korrigierenden Eingaben, sodass das automatische Spracherkennungsmodul oder das Sprachübersetzungsmodul die korrigierenden Eingaben beim Erzeugen des transkribierten Textes in der ersten menschlichen Sprache oder beim Übersetzen des transkribierten Textes in die zweite menschliche Sprache für einen Rest der Audiositzung verwendet;
**dadurch gekennzeichnet, dass** das Verfahren durch das Sprachübersetzungsmodul während der Audiositzung ferner umfasst:
Identifizieren eines Hochrisikowortes in dem übersetzten Text in der zweiten menschlichen Sprache; Markieren des Hochrisikowortes in der Anzeige des übersetzten Textes,
wobei ein Hochrisikowort mindestens eines von vulgärer Sprache, einer Beleidigung, sexistischer oder
rassistischer Sprache, Hassrede und politisch oder sozial aufgeladenen Konzepten und Wörtern umfasst;
Empfangen einer korrigierenden Eingabe von einem Benutzer von einer der einen oder mehreren Client-Vorrichtungen für das Hochrisikowort; und Aktualisieren eines Modells des Sprachübersetzungsmoduls, um die korrigierende Eingabe für das Hochrisikowort für die Audiositzung zu verwenden.

8. Inkrementelles Post-Editing-Transkriptions- und Übersetzungssystem nach Anspruch 1 oder Verfahren nach Anspruch 7, wobei:
die Audiositzung eine Live-Audiositzung durch den Sprecher umfasst; und
das Spracherkennungs- und Übersetzungscomputersystem konfiguriert ist, um während der Live-Audiositzung den transkribierten Text in der ersten menschlichen Sprache zu erzeugen und den transkribierten Text in den Übersetzungstext in der zweiten menschlichen Sprache zu übersetzen.

9. Inkrementelles Post-Editing-Transkriptions- und Übersetzungssystem nach Anspruch 8 oder Verfahren nach Anspruch 8, wobei:
die eine oder mehreren Client-Vorrichtungen konfiguriert sind, um während der Live-Audiositzung den übersetzten Text anzuzeigen und die korrigierenden Eingaben anzunehmen; und
das Spracherkennungs- und Übersetzungscomputersystem konfiguriert ist, um während der Live-Audiositzung die korrigierenden Eingaben zu empfangen und das Sprachübersetzungsmodul zu aktualisieren.

10. Inkrementelles Post-Editing-Transkriptions- und Übersetzungssystem nach Anspruch 1 oder Verfahren nach Anspruch 7, ferner umfassend, nach dem Empfangen der korrigierenden Eingaben von den Benutzern der einen oder mehreren Client-Vorrichtungen, das Aktualisieren, durch das Sprachübersetzungsmodul, des auf der Benutzeroberflächensitzung angezeigten übersetzten Textes, um in einem Präsentationsmodus die korrigierenden Eingaben einzuschließen.

11. Inkrementelles Post-Editing-Transkriptions- und Übersetzungssystem nach Anspruch 10 oder Verfahren nach Anspruch 10, ferner umfassend, gleichzeitig durch die Benutzeroberfläche, in dem Präsentationsmodus, den Text in der ersten menschlichen Sprache und den übersetzten Text in der zweiten menschlichen Sprache.

12. Inkrementelles Post-Editing-Transkriptions- und Übersetzungssystem nach Anspruch 1 oder Verfahren nach Anspruch 7, ferner umfassend, nach der Audiositzung, durch das Sprachübersetzungsmodul, das Übertragen der korrigierenden Eingaben in einen Langzeitspeicher für das Sprachübersetzungsmodul.

13. Inkrementelles Post-Editing-Transkriptions- und Übersetzungssystem nach Anspruch 9 oder Verfahren nach Anspruch 9, ferner umfassend, durch das Sprachübersetzungsmodul, während der Audiositzung:
Identifizieren eines Wortes mit geringer Konfidenz in dem übersetzten Text in der zweiten menschlichen Sprache, bei dem das Sprachübersetzungsmodul ein Konfidenzniveau für das Wort mit geringer Konfidenz aufweist, das unterhalb eines Schwellenwert-Konfidenzniveaus liegt;
Markieren des Wortes mit geringer Konfidenz in der Anzeige des übersetzten Textes; Empfangen einer korrigierenden Eingabe von einem Benutzer von einer der einen oder mehreren Client-Vorrichtungen für das Wort mit geringer Konfidenz; und
Aktualisieren eines Modells des Sprachübersetzungsmoduls, um die korrigierende Eingabe für das Wort mit geringer Konfidenz für die Audiositzung zu verwenden.

14. Verfahren nach Anspruch 9, wobei:
in dem Editor-Modus, durch die Benutzeroberfläche der einen oder mehreren Client-Vorrichtungen: Anzeigen des transkribierten Textes in der ersten menschlichen Sprache während der Audiositzung; und
Annehmen von korrigierenden Eingaben für den transkribierten Text für den angezeigten transkribierten Text von dem Benutzer jeder der einen oder mehreren Client-Vorrichtungen während der Audiositzung; und durch das Spracherkennungs- und Übersetzungscomputersystem:
Empfangen der korrigierenden Eingaben für den transkribierten Text von den Benutzern der einen oder mehreren Client-Vorrichtungen während der Audiositzung; und
Aktualisieren des automatischen Spracherkennungsmoduls basierend auf den empfangenen korrigierten Eingaben für den transkribierten Text während der Audiositzung, sodass das automatische Spracherkennungsmodul die korrigierenden Eingaben für den transkribierten Text beim Erkennen der hörbaren Ausgabe durch den Sprecher während der Audiositzung verwendet;
wobei das Verfahren optional, durch das Spracherkennungs- und Übersetzungscomputersystem, nach dem Empfangen einer korrigierenden Eingabe für den transkribierten Text, die auf einen Teil des transkribierten Textes anwendbar ist, das Neuübersetzen des Teils des transkribierten Textes in die zweite menschliche Sprache umfasst, sodass die Benutzeroberflächen der einen oder mehreren Client-Vorrichtungen den neu übersetzten Teil in der zweiten menschlichen Sprache anzeigen.

## Revendications

1. Système de transcription et de traduction avec post-édition incrémentale comprenant :
un microphone (4) permettant de capter une sortie sonore par un intervenant pendant une session audio par intervenant,
dans lequel la sortie sonore est dans une première langue humaine ;
un système informatique de reconnaissance vocale et de traduction (6) permettant de traduire la sortie sonore par l'intervenant dans la première langue parlée vers une seconde langue humaine, dans lequel le système informatique de reconnaissance vocale et de traduction est en communication avec le microphone et dans lequel le système informatique de reconnaissance vocale et de traduction comprend :
un module de reconnaissance vocale automatique (12, 22) permettant de convertir la sortie sonore captée par le microphone en texte transcrit dans la première langue humaine ; et
un module de traduction de langue (26) permettant de traduire le texte transcrit dans la première langue humaine vers un texte de traduction dans la seconde langue humaine ;
un ou plusieurs dispositifs client en communication avec le système informatique de reconnaissance vocale et de traduction, dans lequel chacun du ou des dispositifs client comprend une interface utilisateur qui, dans un mode éditeur :
est configurée pour afficher le texte transcrit dans la première langue humaine et le texte traduit dans la seconde langue humaine ; et
est configurée pour accepter des entrées correctives provenant d'un utilisateur de chacun du ou des dispositifs client, dans lequel les entrées correctives comprennent des corrections apportées à au moins l'un parmi le texte transcrit dans la première langue ou le texte traduit dans la seconde langue humaine ; et dans lequel le système informatique de reconnaissance vocale et de traduction est destiné à :
recevoir les entrées correctives provenant des utilisateurs du ou des dispositifs client ; et mettre à jour au moins l'un parmi le module de reconnaissance vocale automatique et le module de traduction de langue sur la base des entrées correctives reçues, de telle sorte que le module de reconnaissance vocale automatique ou le module de traduction de langue utilise les entrées correctives pour générer le texte transcrit dans la première langue humaine ou pour traduire le texte transcrit vers la seconde langue humaine pour un reste de la session audio ;
**caractérisé par** le système de transcription et de traduction avec post-édition incrémentale comprenant en outre, par module de traduction de langue, pendant la session audio :
identifier un mot à haut risque dans le texte traduit dans la seconde langue humaine ; signaler le mot à haut risque dans l'affichage du texte traduit, dans lequel un mot à haut risque comprend au moins l'un parmi un langage vulgaire, des insultes, un langage sexiste ou raciste, un discours de haine, et des concepts et mots à connotation politique ou sociale ;
recevoir une entrée corrective provenant d'un utilisateur de l'un parmi le ou les dispositifs client pour le mot à haut risque ; et mettre à jour un modèle du module de traduction de langue afin d'utiliser l'entrée corrective pour le mot à haut risque pour la session audio.

2. Système de transcription et de traduction avec post-édition incrémentale selon la revendication 1, dans lequel la session audio comprend l'un quelconque parmi : un discours en direct par l'intervenant ; une conférence en direct par l'intervenant ; une présentation en direct par l'intervenant ; un dialogue vocal sonore par l'intervenant avec un second intervenant ; un enregistrement d'une sortie sonore par l'intervenant.

3. Système de transcription et de traduction avec post-édition incrémentale selon la revendication 1, dans lequel : la session audio comprend une session audio en direct de l'intervenant ; et le système informatique de reconnaissance vocale et de traduction est configuré pour générer le texte transcrit dans la première langue humaine et pour traduire le texte transcrit vers le texte de traduction dans la seconde langue humaine pendant la session audio en direct ;
dans lequel : le ou les dispositifs client sont configurés pour, pendant la session audio en direct, afficher le texte traduit et accepter les entrées correctives ; et le système informatique de reconnaissance vocale et de traduction est configuré pour, pendant la session audio en direct, recevoir les entrées correctives et mettre à jour le module de traduction de langue ; et
dans lequel : dans le mode édition, l'interface utilisateur du ou des dispositifs client est en outre configurée pour :
afficher le texte transcrit dans la première langue humaine pendant la session audio ; et accepter les entrées correctives de texte transcrit apportées au texte transcrit affiché provenant de l'utilisateur de chacun du ou des dispositifs client pendant la session audio ; et
le système informatique de reconnaissance vocale et de traduction est en outre configuré pour : recevoir les entrées correctives de texte transcrit provenant des utilisateurs du ou des dispositifs client pendant la session audio ; et
mettre à jour le module de reconnaissance vocale automatique sur la base des entrées corrigées de texte transcrit reçues pendant la session audio, de telle sorte que le module de reconnaissance vocale automatique utilise les entrées correctives de texte transcrit pour reconnaître la sortie sonore par l'intervenant pendant la session audio.

4. Système de transcription et de traduction avec post-édition incrémentale selon la revendication 3, dans lequel le système informatique de reconnaissance vocale et de traduction est en outre configuré pour, dès réception d'une entrée corrective de texte transcrit qui est applicable à une partie du texte transcrit, retraduire la partie du texte transcrit vers la seconde langue humaine de telle sorte que les interfaces utilisateur du ou des dispositifs client affichent la partie retraduite dans la seconde langue humaine.

5. Système de transcription et de traduction avec post-édition incrémentale selon la revendication 1, dans lequel : Le système de transcription et de traduction avec post-édition incrémentale comprend en outre :
un moyen de stockage permettant de stocker un enregistrement de la session audio ; et
un moyen permettant de lire de manière audible l'enregistrement de la session audio ;
le système informatique de reconnaissance vocale et de traduction est configuré pour générer le texte transcrit dans la première langue humaine et pour traduire le texte transcrit vers le texte de traduction dans la seconde langue humaine pendant une lecture de la session audio enregistrée ;
le ou les dispositifs client sont configurés pour, pendant la lecture de la session audio enregistrée, afficher le texte traduit et accepter les entrées correctives ; et
le système informatique de reconnaissance vocale et de traduction est configuré pour, pendant la lecture de la session audio enregistrée, recevoir les entrées correctives et mettre à jour le module de traduction de langue.

6. Système de transcription et de traduction avec post-édition incrémentale selon la revendication 5, dans lequel :
dans le mode édition, l'interface utilisateur du ou des dispositifs client est en outre configurée pour :
afficher le texte transcrit dans la première langue humaine pendant la lecture de la session audio enregistrée ; et
accepter les entrées correctives de texte transcrit apportées au texte transcrit affiché provenant de l'utilisateur de chacun du ou des dispositifs client pendant la lecture de la session audio enregistrée ; et
le système informatique de reconnaissance vocale et de traduction est en outre configuré pour : recevoir les entrées correctives de texte transcrit provenant des utilisateurs du ou des dispositifs client pendant la lecture de la session audio ;
mettre à jour le module de reconnaissance vocale automatique sur la base des entrées corrigées de texte transcrit reçues pendant la lecture de la session audio enregistrée, de telle sorte que le module de reconnaissance vocale automatique utilise les entrées correctives de texte transcrit pour reconnaître la sortie sonore par l'intervenant pendant la lecture de la session audio enregistrée ; et
dès réception d'une entrée corrective de texte transcrit qui est applicable à une partie du texte transcrit, retraduire la partie du texte transcrit vers la seconde langue humaine de telle sorte que les interfaces utilisateur du ou des dispositifs client affichent la partie retraduite dans la seconde langue humaine.

7. Procédé comprenant :
la captation, par un microphone (4), d'une sortie sonore par un intervenant pendant une session audio par intervenant, dans lequel le signal sonore est dans une première langue humaine ;
la traduction, par un système informatique de reconnaissance vocale et de traduction (6) de la sortie sonore par l'intervenant dans une première langue parlée vers une seconde langue humaine, dans lequel le système informatique de reconnaissance vocale et de traduction est en communication avec le microphone et dans lequel le système informatique de reconnaissance vocale et de traduction comprend :
un module de reconnaissance vocale automatique (12, 22) qui convertit la sortie sonore captée par le microphone en texte transcrit dans la première langue humaine ; et
un module de traduction de langue (26) permettant de traduire le texte transcrit dans la première langue humaine vers un texte de traduction dans la seconde langue humaine ;
l'affichage, par un ou plusieurs dispositifs client en communication avec le système informatique de reconnaissance vocale et de traduction, du texte transcrit dans la première langue humaine et du texte traduit dans la seconde langue humaine ;
l'acceptation, par le ou les dispositifs client, d'entrées correctives à partir d'un utilisateur de chacun du ou des dispositifs client,
dans lequel les entrées correctives comprennent des corrections apportées à au moins l'un parmi le texte transcrit dans la première langue humaine et le texte traduit dans la seconde langue humaine ;
la réception, par le système de reconnaissance vocale et de traduction, des entrées correctives provenant des utilisateurs du ou des dispositifs client ; et
la mise à jour, par le système de reconnaissance vocale et de traduction, d'au moins l'un parmi le module de reconnaissance vocale automatique ou le module de traduction de langue sur la base des entrées correctives reçues, de telle sorte que le module de reconnaissance vocale automatique ou le module de traduction de langue utilise les entrées correctives pour générer le texte transcrit dans la première langue humaine ou pour traduire le texte transcrit vers la seconde langue humaine pour un reste de la session audio ;
**caractérisé en ce que** le procédé comprend en outre, par le module de traduction de langue, pendant la session audio :
l'identification d'un mot à haut risque dans le texte traduit dans la seconde langue humaine ; le signalement du mot à haut risque dans l'affichage du texte traduit,
dans lequel un mot à haut risque comprend au moins l'un parmi un langage vulgaire, une insulte, un langage sexiste ou raciste, un discours de haine, et des concepts et mots à connotation politique ou sociale ;
la réception d'une entrée corrective provenant d'un utilisateur de l'un parmi le ou les dispositifs client pour le mot à haut risque ; et la mise à jour d'un modèle du module de traduction de langue afin d'utiliser l'entrée corrective pour le mot à haut risque pour la session audio.

8. Système de transcription et de traduction avec post-édition incrémentale selon la revendication 1, ou procédé selon la revendication 7, dans lequel :
la session audio comprend une session audio en direct par l'intervenant ; et
le système informatique de reconnaissance vocale et de traduction est configuré pour générer le texte transcrit dans la première langue humaine et pour traduire le texte transcrit vers le texte de traduction dans la seconde langue humaine pendant la session audio en direct.

9. Système de transcription et de traduction avec post-édition incrémentale selon la revendication 8, ou procédé selon la revendication 8, dans lequel :
le ou les dispositifs client sont configurés pour, pendant la session audio en direct, afficher le texte traduit et accepter les entrées correctives ; et
le système informatique de reconnaissance vocale et de traduction est configuré pour, pendant la session audio en direct, recevoir les entrées correctives et mettre à jour le module de traduction de langue.

10. Système de transcription et de traduction avec post-édition incrémentale selon la revendication 1 ou le procédé selon la revendication 7, comprenant en outre, après réception des entrées correctives provenant des utilisateurs du ou des dispositifs client, la mise à jour, par le module de traduction de langue, du texte traduit affiché sur la session d'interface utilisateur pour inclure, dans un mode de présentation, les entrées correctives.

11. Système de transcription et de traduction avec post-édition incrémentale selon la revendication 10 ou procédé selon la revendication 10, comprenant en outre, simultanément par l'interface utilisateur, dans le mode de présentation, le texte dans la première langue humaine et le texte traduit dans la seconde langue humaine.

12. Système de transcription et de traduction avec post-édition incrémentale selon la revendication 1 ou procédé selon la revendication 7, comprenant en outre, après la session audio, par le module de traduction de langue, le transfert des entrées correctives vers une mémoire à long terme du module de traduction de langue.

13. Système de transcription et de traduction avec post-édition incrémentale selon la revendication 9 ou procédé selon la revendication 9, comprenant en outre, par le module de traduction de langue, pendant la session audio :
l'identification d'un mot à faible niveau de confiance dans le texte traduit vers la seconde langue humaine où le module de traduction de langue a un niveau de confiance pour le mot à faible niveau de confiance inférieur à un niveau de confiance seuil ;
le signalement du mot à faible niveau de confiance dans l'affichage du texte traduit ; la réception d'une entrée corrective provenant d'un utilisateur de l'un parmi le ou les dispositifs client pour le mot à faible niveau de confiance ; et
la mise à jour d'un modèle du module de traduction de langue afin d'utiliser l'entrée corrective pour le mot à faible niveau de confiance pour la session audio.

14. Procédé selon la revendication 9, dans lequel :
dans le mode édition, par l'interface utilisateur du ou des dispositifs client : l'affichage du texte transcrit dans la première langue humaine pendant la session audio ; et
l'acceptation d'entrées correctives de texte transcrit apportées au texte transcrit affiché provenant de l'utilisateur de chacun du ou des dispositifs client pendant la session audio ; et par le système informatique de reconnaissance vocale et de traduction :
la réception des entrées correctives de texte transcrit provenant des utilisateurs du ou des dispositifs client pendant la session audio ; et
la mise à jour du module de reconnaissance vocale automatique sur la base des entrées corrigées de texte transcrit reçues pendant la session audio, de telle sorte que le module de reconnaissance vocale automatique utilise les entrées correctives de texte transcrit pour reconnaître la sortie sonore par l'intervenant pendant la session audio ;
le procédé comprenant éventuellement, par le système informatique de reconnaissance vocale et de traduction, dès réception d'une entrée corrective de texte transcrit qui est applicable à une partie du texte transcrit, la retraduction de la partie du texte transcrit vers la seconde langue humaine de telle sorte que les interfaces utilisateur du ou des dispositifs client affichent la partie retraduite dans la seconde langue humaine.
